# EUROPEAN PATENT APPLICATION

(11) **EP 2 955 931 A1**
(43) Date of publication of application: **16.12.2015**
(21) Application number: 15163357.5
(22) Date of filing: 13.04.2015
(51) Int. Cl.: H04N 21/81, H04N 21/426, H04N 21/432

(54) **IMAGE SWITCHING METHOD AND DEVICE**

(30) Priority: 11.06.2014 CN 201410257716
(71) Applicant: Xiaomi Inc., Beijing 100085 (CN)
(72) Inventor: Liu, Shengli, Haidian District (CN)
(74) Representative: Hanna, Peter William Derek

(57) **Abstract**

The present disclosure generally relates to a method and device for switching or transitioning between displayed images in a high definition format, and pertains to the field of image processing. The method includes: overlapping (102) a first resolution version of an ith image on a second resolution version of the ith image displayed currently, the resolution of the first resolution version being below that of the second resolution version, i≥1; and replacing (104) the second resolution version of the ith image with the second resolution version of the (i+1)th image; hiding (106) the first resolution version of the ith image according to predetermined animation effects and displaying the second resolution version of the (i+1)th image. The image switching method and device succeed in solving the problem in the background art that smooth switching is unavailable among a plurality of 4K images by means of predetermined animation effects thus leading to poorer display effect during switching and displaying 4K images. Smooth switching of the second resolution versions of two adjacent images is realized by way of the animation effect generated by the first resolution version of the previous image being overlapped on a second resolution version, thus improving the switching and displaying effect.

## Description

### TECHNICAL FIELD

The present disclosure generally relates to the field of image processing, and more particularly, to a method and device for switching or transitioning between displayed images in a high definition format.

### BACKGROUND

4K resolution is an emerging ultrahigh resolution standard for digital film and computer video. Common 4K resolution includes 3840×2160 pixels and 4096×2160 pixels. "4K" takes its name from number of pixels in the horizontal direction.

With the development of 4K technology, more and more attention is paid to 4K TV, 4K image and 4K video. Whereas, a 4K image refers to an image whose resolution is below 4K, also known as ultra-high definition (UHD) image. A 4K image is fine in display quality and bright in colour, allowing users to clearly see every detail and close-up in frames.

In the process of realization of the present disclosure, it has been found that aforementioned modes have at least disadvantages as below: limited by the current 4K technology, smooth switching is unavailable among a plurality of 4K images by means of predetermined animation effects, thus leading to poorer display effects during switching and displaying 4K images.

### SUMMARY

The present invention provides an image switching method and device in accordance with claims which follow, in order to solve the problem in the aforementioned technology that smooth switching or transitioning is unavailable among a plurality of 4K images by means of predetermined animation effects thus leading to poorer display effects during switching and displaying 4K images. Smooth switching of the second resolution versions of two adjacent images is realized by way of the animation effect generated by the first resolution version of the previous image being overlapped on a second resolution version, thus improving the switching and displaying effect.

The technical solution is as below:

According to the first aspect of the embodiments of the present disclosure, an image switching method is provided, and the method includes:
overlapping a first resolution version of an ith image on a second resolution version of the ith image displayed currently, the resolution of the first resolution version being below that of the second resolution version, i≥1; and
replacing the second resolution version of the ith image with the second resolution version of the (i+1)th image;
hiding the first resolution version of the ith image according to predetermined animation effects and displaying the second resolution version of the (i+1)th image.

Preferably, the overlapping the first resolution version of the ith image on the second resolution version of the ith image displayed currently, comprising:
overlapping the first resolution version of the ith image with a transparency of 0 onto the second resolution version of the ith image displayed currently; and
gradually adjusting the transparency of the first resolution version of the ith image from 0 to 1.

Preferably, the hiding the first resolution version of the ith image according to predetermined animation effects and displaying the second resolution version of the (i+1)th image, comprising:
gradually adjusting the transparency of the first resolution version of the ith image from 1 to 0; and
displaying the second resolution version of the (i+1)th image.

Preferably, the method also includes:
displaying a background image with a transparency of 1, the background image being overlapped on the second resolution version of the first image, and the background image being the image of the first resolution version;
gradually adjusting the transparency of the background image from 1 to 0; and
displaying the second resolution version of the first image.

Preferably, the method also includes:
overlapping the first resolution version of the (i+1)th image with a transparency of 0 on the second resolution version of the (i+1)th image displayed currently when the (i+1)th image is the last one; and
gradually adjusting the transparency of the first resolution version of the (i+1)th image from 0 to 1.

According to the second aspect of the embodiments of the present disclosure, an image switching device is provided, and the device includes:
an image overlapping module, configured to overlap a first resolution version of an ith image on a second resolution version of the ith image displayed currently, the resolution of the first resolution version being below that of the second resolution version, i≥1;
an image replacement module, configured to replace the second resolution version of the ith image with a second resolution version of an (i+1)th image;
and an image display module, configured to hide the first resolution version of the ith image according to predetermined animation effects and to display the second resolution version of the (i+1)th image.

Preferably, the image overlapping module includes: an image overlapping module and a first adjustment module; wherein
the image overlapping module is configured to overlap the first resolution version of the ith image with a transparency of 0 on the second resolution version of the ith image displayed currently;
the first adjustment module is configured to gradually adjust the transparency of the first resolution version of the ith image from 0 to 1;

Preferably, the image display module includes: a second adjustment module and an image display module; wherein
the second adjustment module is configured to gradually adjust the transparency of the first resolution version of the ith image from 1 to 0;
and the image display module is configured to display the second resolution version of the (i+1)th image.

Preferably, the device also includes:
a background display module, configured to display a background image with a transparency of 1; wherein the background image is overlapped on the second resolution version of the first image, and the background image is the image of the first resolution version;
a first adjustment module, configured to gradually adjust the transparency of the background image from 1 to 0;
and a first display module, configured to display the second resolution version of the first image.

Preferably, the device also includes:
a version overlapping module, configured to overlap the first resolution version of the (i+1)th image with a transparency of 0 on the second resolution version of the (i+1)th image displayed currently when the (i+1)th image is the last one;
and a second adjustment module, configured to gradually adjust the transparency of the first resolution version of the (i+1)th image from 0 to 1;

According to the third aspect of the embodiments of the present disclosure, an image switching device is provided, including:
a processor;
a memory configured to store instructions executable by the processor;
wherein, the processor is configured to perform:
overlapping a first resolution version of an ith image on a second resolution version of the ith image displayed currently, the resolution of the first resolution version being below that of the second resolution version, i≥1;
replacing the second resolution version of the ith image with the second resolution version of the (i+1)th image;
hiding the first resolution version of the ith image according to predetermined animation effects and displaying the second resolution version of the (i+1)th image.

The technical scheme according to the embodiment of the disclosure may have the following beneficial effects:

The problem in the prior art that smooth switching is unavailable among a plurality of 4K images by means of predetermined animation effects thus leading to poorer display effect during switching and displaying 4K images may be solved by overlapping a first resolution version of an ith image on a second resolution version of the ith image displayed currently, replacing the second resolution version of the ith image with a second resolution version of an (i+1)th image, and hiding the first resolution version of the ith image according to predetermined animation effects and displaying the second resolution version of the (i+1)th image. In the process of switching the second resolution versions of two adjacent images, with the first resolution version of the previous image serving as a linkage, smooth switching or transitioning of the second resolution versions of both the adjacent images may be achieved by the animation effect generated by the first resolution version of the previous image, thus not only improving the effect during switching and displaying both images but also enhancing user's visual experience.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing an image switching method according to an exemplary embodiment;
Fig. 2A is a flow chart showing an image switching method according to another exemplary embodiment;
Fig. 2B is a schematic diagram showing image switching and displaying according to an exemplary embodiment;
Fig. 3 is a block diagram of an image switching device according to an exemplary embodiment;
Fig. 4 is a block diagram of an image switching device according to another exemplary embodiment;
Fig. 5 is a block diagram of a device according to an exemplary embodiment.

Specific embodiments of the present disclosure are shown by the above drawings, and more detailed description will be made hereinafter.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Firstly it should be explained that, in embodiments of the present disclosure, the electronic equipment involved may be a smart mobile phone, a tablet computer, an ebook reader, a MP3 (Moving Picture Experts Group Audio Layer III) player, a MP4 (Moving Picture Experts Group Audio Layer IV) player, a laptop computer, a desktop computer, a smart television and the like.

In addition, the first resolution version and the second resolution version of an image are prestored in the electronic equipment. Concerning both the foregoing versions of the same image, the resolution of the first resolution version is below that of the second resolution version, and both the first resolution version and the second resolution version have identical or similar image size, color saturation and brightness and other parameters.

Embodiments of the present disclosure are illustrated by taking the first resolution version as 2K resolution version (eg. "high definition" or HD) and the second resolution version as 4K resolution version (eg. "ultra high definition" or UHD). In other possible implementations, the first resolution version may be a version with lower resolution, such as 720P resolution (eg. "HD ready"), 1080P resolution (eg. "full HD") or 2K resolution; while the second resolution version may be a version with higher resolution, such as 4K resolution or 8K resolution. Therefore, concerning both the foregoing versions of the same image, it is acceptable as long as the resolution of the first resolution version is below that of the second resolution version, and the embodiment makes no specific restriction on actual resolutions of both the foregoing versions.

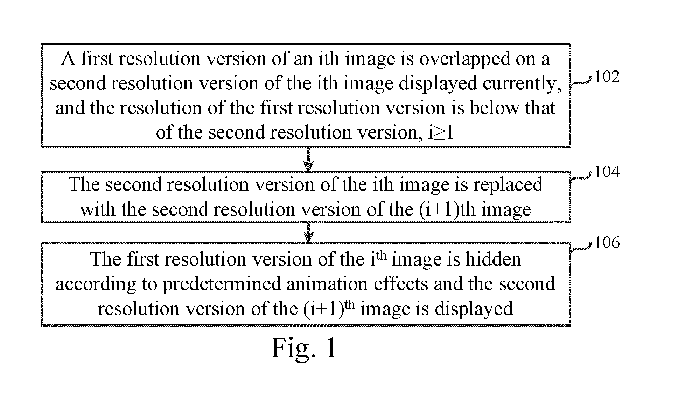

Fig. 1 is a flow chart showing an image switching method according to an exemplary embodiment which is illustrated by application of the image switching method into electronic equipment. The image switching method may include following steps:

In Step 102, a first resolution version of an ith image is overlapped on a second resolution version of the ith image displayed currently, and the resolution of the first resolution version is below that of the second resolution version, i≥1.

In Step 104, the second resolution version of the ith image is replaced with the second resolution version of the (i+1)th image.

In Step 106, the first resolution version of the ith image is hidden according to predetermined animation effects and the second resolution version of the (i+1)th image is displayed.

In conclusion, the image switching method provided by the embodiment solves such a problem in the background art that smooth switching is unavailable among a plurality of 4K images by means of predetermined animation effects thus leading to poorer display effect during switching and displaying 4K images by overlapping a first resolution version of an ith image on a second resolution version of the ith image displayed currently, replacing the second resolution version of the ith image with a second resolution version of an (i+1)th image, and hiding the first resolution version of the ith image according to predetermined animation effects and displaying the second resolution version of the (i+1)th image. In the process of switching the second resolution versions of two adjacent images, with the first resolution version of the previous image serving as a linkage, smooth switching of the second resolution versions of both the adjacent images may be achieved by the animation effect generated by the first resolution version of the previous image, thus not only improving the effect during switching and displaying both images but also enhancing user experience.

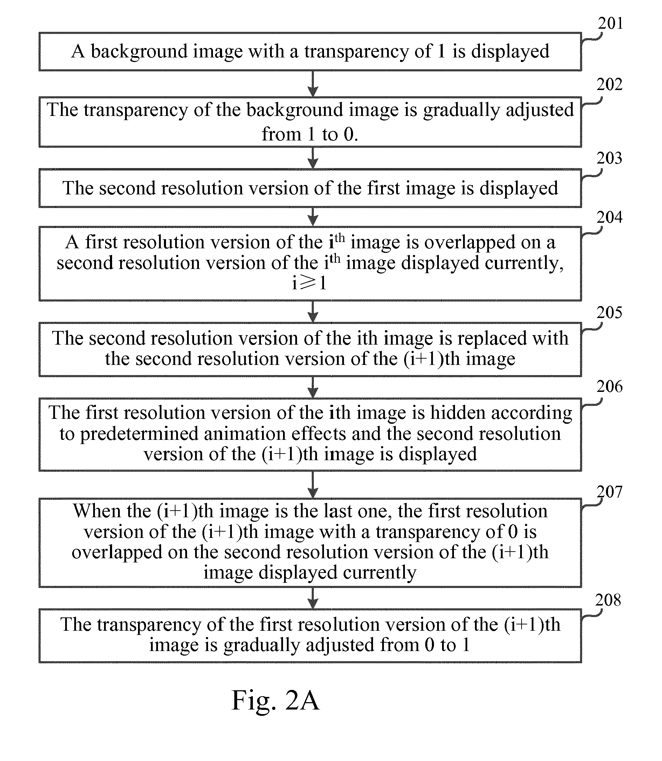

Fig. 2A is a flow chart showing an image switching method according to another exemplary embodiment which is illustrated by application of the image switching method into electronic equipment. The image switching method may include following steps:

In Step 201, a background image with a transparency of 1 is displayed.

Prior to switching and displaying the second resolution versions of a group of images, the electronic equipment firstly displays the background image with a transparency of 1. The background image may be any an image preset, and the background image is the image of the first resolution version. For example, the background image is a black image of with a 2K resolution version.

The background image is overlapped on the second resolution version of the first image, and the first image is the first image displayed in a group of images to be displayed.

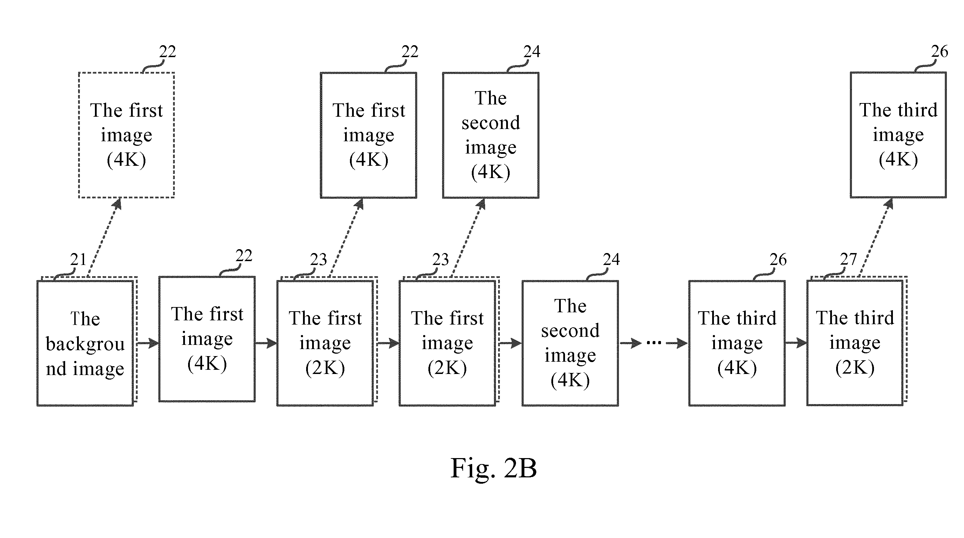

In the present embodiment, take the group of images to be displayed including three images as example, in which the first resolution version of each image is 2K resolution version and the second resolution version thereof is 4K resolution version. Please refer to Fig.2B, which is a schematic diagram showing image switching and displaying. Prior to switching and displaying the aforementioned three images, the background image 21 is overlapped on the 4K resolution version 22 of the first image, and at the moment the background image 21 has a transparency of 1.

It should be explained that in actual display effect, when two images are mutually overlapped, the postpose image is covered over by the prepose image. In Fig.2B, the postpose image is outlined in a dotted line so as to more clearly illustrate the overlap of images.

In Step 202, the transparency of the background image is gradually adjusted from 1 to 0.

When the transparency of the background image is gradually adjusted from 1 to 0, the background image gradually changes from opacity to complete transparency, i.e., the background image fades out in a fade-out animation effect. In the meantime, the second resolution version of the first image overlapped under the background image fades in.

In Step 203, the second resolution version of the first image is displayed.

The second resolution version of the first image is fully displayed when the transparency of the background image turns into 0. During automatically switching and displaying images, the electronic equipment displays the second resolution version of the first image for a preset display duration. When a user triggers for switching and displaying images, the electronic equipment keeps displaying the second resolution version of the first image before receiving the user's trigger signal.

As shown in Fig.2B, the 4K resolution version 22 of the first image is fully displayed when the transparency of the background image 21 is gradually adjusted from 1 to 0.

It should be explained that, in the embodiment, it is illustrated merely by adjusting the transparency of the prepose image (or upper image) so that the postpose image (or under image) is switched in a fade-in animation effect. In other possible implementations, the prepose image may fade out by way of other animation effects such as jalousie, checkerboard, flyout, splitting and the like, and may switch out the postpose image, on which the embodiment makes no specific restriction.

The second resolution version of the first image is switched out of the background image, which is referred to in foregoing Steps 201-203. Hereinafter, in Steps 204-206 it will be introduced that the second resolution version of the latter image is switched out of the second resolution version of the previous one.

In Step 204, a first resolution version of the ith image is overlapped on a second resolution version of the ith image displayed currently, i≥1.

Concerning both the foregoing versions of the same image, the resolution of the first resolution version is below that of the second resolution version, and both the first resolution version and the second resolution version have identical or similar image size, color saturation brightness and other parameters. When the first resolution version of the ith image is overlapped onto the second resolution version of the ith image displayed currently, users may only perceive that the definition of the ith image is slightly reduced, while the image content is not changed at all.

The step may include following substeps.

Firstly, the first resolution version of the ith image with a transparency of 0 is overlapped on the second resolution version of the ith image displayed currently.

Secondly, the transparency of the first resolution version of the ith image is gradually adjusted from 0 to 1.

The second resolution version of the ith image currently displayed is overlapped by gradually adjusting the transparency of the first resolution version of the ith image, which may at the most extent avoid users' visual impact resulting from sharp drop of image resolution and allow users to relatively easily adapt themselves to differences caused by the image switching process.

As shown in Fig.2B, the 2K resolution version 23 of the first image is overlapped by the electronic equipment onto the 4K resolution version 22 of the first image.

In Step 205, the second resolution version of the ith image is replaced with the second resolution version of the (i+1)th image.

After the second resolution version of the ith image is covered over by the first resolution version thereof, the second resolution version of the ith image is replaced with the second resolution version of the (i+1)th image by the electronic equipment. In the process of above replacement, users may see the first resolution version of the opaque ith image displayed in the front, unable to perceive the replacement progress in the background.

As shown in Fig.2B, the 4K resolution version 22 of the first image is replaced with the 4K resolution version 24 of the second image by the electronic equipment.

In Step 206, the first resolution version of the ith image is hidden according to predetermined animation effects and the second resolution version of the (i+1)th image is displayed.

Wherein, the predetermined animation effects may be fade-out, jalousie, checkerboard, flyout, splitting and the like.

When the predetermined animation effect is fade-out, the step may include following substeps.

Firstly, the transparency of the first resolution version of the ith image is gradually adjusted from 1 to 0.

Secondly, the second resolution version of the (i+1)th image is displayed.

When the transparency of the first resolution version of the ith image is gradually adjusted from 1 to 0, the first resolution version of the ith image gradually changes from opacity to complete transparency, i.e., the first resolution version of the ith image fades out in a fade-out animation effect. In the meantime, the second resolution version of the (i+1)th image overlapped under the first resolution version of the ith image fades in. The second resolution version of the (i+1)th image is fully displayed when the transparency of the first resolution version of the ith image turns into 0.

In addition, during automatically switching and displaying images, the electronic equipment displays, the second resolution version of the (i+1)th image for a preset display duration. When a user triggers for switching and displaying images, the electronic equipment keeps displaying the second resolution version of the (i+1)th image before receiving the user's trigger signal.

As shown in Fig.2B, the 4K resolution version 24 of the second image is fully displayed when the transparency of the 2K resolution version 23 of the first image is gradually adjusted from 1 to 0. In addition, the process where the 4K resolution version 24 of the second image is switched to the 4K resolution version 26 of the third image is the same as that where the 4K resolution version 22 of the first image is switched to the 4K resolution version 24 of the second image, not repeated herein.

In Step 207, when the (i+1)th image is the last one, the first resolution version of the (i+1)th image with a transparency of 0 is overlapped on the second resolution version of the (i+1)th image displayed currently.

In Step 208, the transparency of the first resolution version of the (i+1)th image is gradually adjusted from 0 to 1.

The foregoing Steps 207-208 are similar to Step 204, after the second resolution version of the last image in a set of images is displayed, the second resolution version of the last image currently displayed is overlapped by gradually adjusting the transparency of the first resolution version of the last image so that the second resolution version of the last image fades out of sight of users.

As shown in Fig.2B, the 2K resolution version 27 of the third image is overlapped by the electronic equipment onto the 4K resolution version 26 of the third image, and the transparency of the 2K resolution version 27 of the third image is gradually adjusted from 0 to 1 so that the 4K resolution version 26 of the third image fades out.

In conclusion, the image switching method provided by the embodiment solves such a problem in the background art that smooth switching is unavailable among a plurality of 4K images by means of predetermined animation effects thus leading to poorer display effect during switching and displaying 4K images by overlapping a first resolution version of an ith image on a second resolution version of the ith image displayed currently, by replacing the second resolution version of the ith image with a second resolution version of an (i+1)th image, and by hiding the first resolution version of the ith image according to predetermined animation effects and displaying the second resolution version of the (i+1)th image. In the process of switching the second resolution versions of two adjacent images, with the first resolution version of the previous image serving as a linkage, smooth switching of the second resolution versions of both the adjacent images may be achieved by the animation effect generated by the first resolution version of the previous image, thus not only improving the effect during switching and displaying both images but also enhancing user experience.

In addition, in the image switching method according to the embodiment, the transparency of the first resolution version of the previous image is adjusted and the first resolution version of the previous image is taken as cinematics so that the second resolution version of the next image fades in, which may allow users to relatively lenitively adapt themselves to definition differences caused by the image switching process. Meanwhile, demands for the electronic equipment's computer processing capability may be adequately reduced, thus guaranteeing the fluency in switching images.

The following is the embodiment of the device in the present disclosure, which may be configured to perform the embodiment of the method in the present disclosure. Please refer to the embodiment of the method in the present disclosure with regard to undisclosed details about the embodiment of the device in the present disclosure.

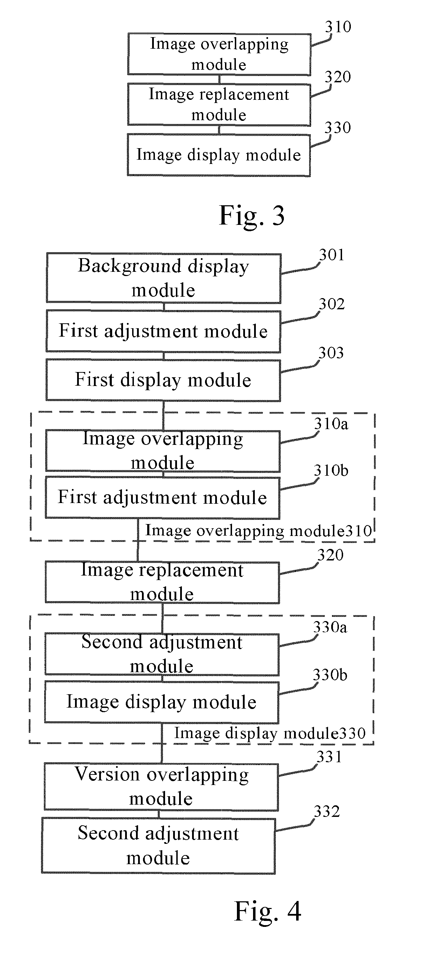

Fig. 3 is a block diagram of an image switching device according to an exemplary embodiment. The image switching device may realize to become the electronic equipment in part or in whole by means of software and hardware or combination of both. The image switching device may include: an image overlapping module 310, an image replacement module 320 and an image display module 330.

The image overlapping module 310 is configured to overlap the first resolution version of an ith image on the second resolution version of the ith image displayed currently, and the resolution of the first resolution version is below that of the second resolution version, i≥1.

The image replacement module 320 is configured to replace the second resolution version of the ith image with the second resolution version of the (i+1)th image.

The image display module 330 is configured to hide the first resolution version of the ith image according to predetermined animation effects and to display the second resolution version of the (i+1)th image.

In conclusion, the image switching device provided by the embodiment solves such a problem in the background art that smooth switching is unavailable among a plurality of 4K images by means of predetermined animation effects thus leading to poorer display effect during switching and displaying 4K images by overlapping a first resolution version of an ith image on a second resolution version of the ith image displayed currently, by replacing the second resolution version of the ith image with a second resolution version of an (i+1)th image, and by hiding the first resolution version of the ith image according to predetermined animation effects and displaying the second resolution version of the (i+1)th image. In the process of switching the second resolution versions of two adjacent images, with the first resolution version of the previous image serving as a linkage, smooth switching of the second resolution versions of both the adjacent images may be achieved by the animation effect generated by the first resolution version of the previous image, thus not only improving the effect during switching and displaying both images but also enhancing user experience.

Fig. 4 is a block diagram of an image switching device according to another exemplary embodiment. The image switching device may be realized by means of software and hardware or combination of both to become the electronic equipment in part or in whole. The image switching device may include: an image overlapping module 310, an image replacement module 320 and an image display module 330.

The image overlapping module 310 is configured to overlap the first resolution version of an ith image on the second resolution version of the ith image displayed currently, and the resolution of the first resolution version is below that of the second resolution version, i≥1.

The image overlapping module 310 includes: an image overlapping module 310a and a first adjustment module 310b.

The image overlapping module 310a is configured to overlap the first resolution version of the ith image with a transparency of 0 on the second resolution version of the ith image displayed currently.

The first adjustment module 310b is configured to gradually adjust the transparency of the first resolution version of the ith image from 0 to 1.

The image replacement module 320 is configured to replace the second resolution version of the ith image with the second resolution version of the (i+1)th image.

The image display module 330 is configured to hide the first resolution version of the ith image according to predetermined animation effects and to display the second resolution version of the (i+1)th image.

The image display module 330 includes: a second adjustment module 330a and an image display module 330b.

The second adjustment module 330a is configured to gradually adjust the transparency of the first resolution version of the ith image from 1 to 0.

The image display module 330b is configured to display the second resolution version of the (i+1)th image.

Preferably, the device may also include: a background display module 301, a first adjustment module 302 and a first display module 303.

The background display module 301 is configured to display a background image with a transparency of 1, the background image is overlapped on the second resolution version of the first image, and the background image is the image with the first resolution version.

The first adjustment module 302 is configured to gradually adjust the transparency of the background image from 1 to 0.

The first display module 303 is configured to display the second resolution version of the first image.

Preferably, the device may also include: a version overlapping module 331 and a second adjustment module 332.

The version overlapping module 331 is configured to overlap the first resolution version of the (i+1)th image with a transparency of 0 on the second resolution version of the (i+1)th image displayed currently when the (i+1)th image is the last one.

The second adjustment module 332 is configured to gradually adjust the transparency of the first resolution version of the (i+1)th image from 0 to 1.

In conclusion, the image switching device provided by the embodiment solves such a problem in the background art that smooth switching is unavailable among a plurality of 4K images by means of predetermined animation effects thus leading to poorer display effect during switching and displaying 4K images by overlapping a first resolution version of an ith image on a second resolution version of the ith image displayed currently, by replacing the second resolution version of the ith image with a second resolution version of an (i+1)th image, and by hiding the first resolution version of the ith image according to predetermined animation effects and displaying the second resolution version of the (i+1)th image. In the process of switching the second resolution versions of two adjacent images, with the first resolution version of the previous image serving as a linkage, smooth switching of the second resolution versions of both the adjacent images may be achieved by the animation effect generated by the first resolution version of the previous image, thus not only improving the effect during switching and displaying both images but also enhancing user experience.

In addition, in the image switching device according to the embodiment, the transparency of the first resolution version of the previous image is adjusted and the first resolution version of the previous image is taken as cinematics so that the second resolution version of the next image fades in, which may allow users to relatively easily adapt themselves to definition differences caused by the image switching process. Meanwhile, demands for the electronic equipment's computer processing capability may be adequately reduced, thus guaranteeing the fluency in switching images.

With regard to the device in the above embodiment, detailed description of specific modes for executing operation of modules has been made in the embodiment of the method, no detailed illustration will be made herein.

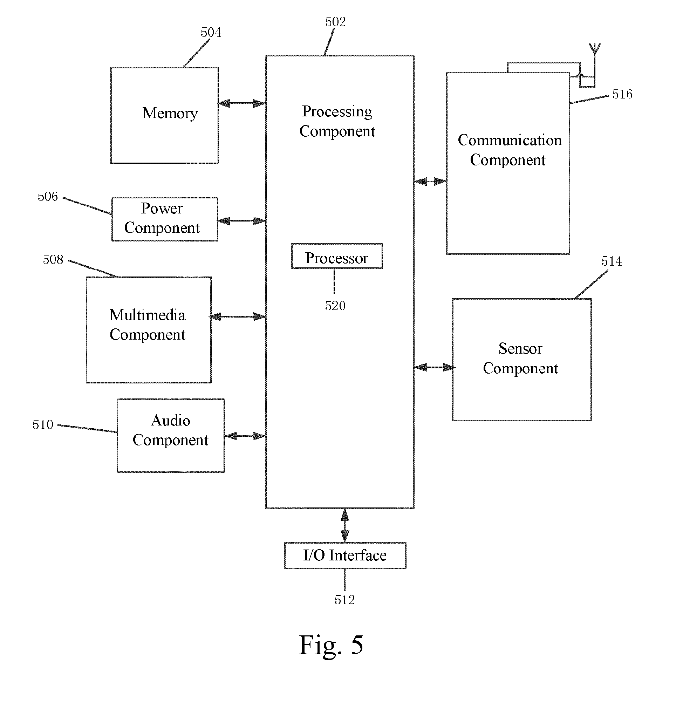

Fig. 5 is a block diagram of an image switching device 500 according to an exemplary embodiment. For example, the device 500 may be a mobile telephone, a computer, a digital broadcasting terminal, a message transceiver device, a games console, a tablet device, a medical device, a fitness facility, a PDA (personal digital assistant) and the like.

Referring to Fig.5, the device 500 may include one or a plurality of components as below: a processor component 502, a memory 504, a power supply component 506, a multimedia component 508, an audio component 510, an input/output (I/O) interface 512, a sensor component 514 and a communication component 516.

The processor component 502 usually controls the overall operation of the device 500, for example, display, telephone call, data communication, and operation associated with camera operation and record operation. The processor component 502 may include one or a plurality of processors 520 for executing instructions so as to complete steps of above method in part or in whole. In addition, the processor component 502 may include one or a plurality of components for the convenience of interaction between the processor component 502 and other components. For example, the processor component 502 may include a multimedia module for the convenience of interaction between the multimedia component 508 and the processor component 502.

The memory 504 is configured to store data of different types so as to support the operation of the device 500. Examples of the data include any application program or approach directive for operation of the device 500, including contact data, phonebook data, message, picture and video, etc. The memory 504 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 506 provides power for components of the device 500. The power supply component 506 may include a power management system, one or a plurality of power supplies, and other components associated with power generation, management and distribution of the device 500.

The multimedia component 508 includes a screen between the device 500 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only may sensor trip boundary of touching or sliding, but also may detect the duration and pressure related to the touching or sliding operation. In some embodiments, the multimedia component 508 includes a front-facing camera and/or a rear-facing camera. When the device 500 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 510 is configured to output and/or input audio signal. For example, the audio component 510 includes a microphone (MIC). When the device 500 is under an operation mode such as call mode, record mode and speech recognition mode, the microphone is configured to receive external audio signal. The audio signal received may be further stored in the memory 504 or sent out by the communication component 516. In some embodiments, the audio component 510 also includes a loudspeaker for outputting audio signal.

The I/O interface 512 provides interface for the processor component 502 and peripheral interface components, the peripheral interface components may be a keyboard, a click wheel and buttons, etc. These buttons may include but not limited to: home button, volume button, start button and locking button.

The sensor component 514 includes one or a plurality of sensors for providing the device 500 with state evaluation from all aspects. For example, the sensor component 514 may detect the on/off state of the device 500, relative positioning of components, for example, the components are the displayer and keypads of the device 500. The sensor component 514 also may detect the position change of the device 500 or a component thereof, the presence or absence of users' touch on the device 500, the direction or acceleration/deceleration of the device 500, and temperature variation of the device 500. The sensor component 514 may also include a proximity detector, which is configured to detect the presence of nearby objects in case of no physical touch. The sensor component 514 may also include an optical sensor, for example, CMOS or CCD image sensor for imaging. In some embodiments, the sensor component 514 may also include an acceleration sensor, a gyro sensor, a magnetic sensor, a pressure sensor, or a temperature sensor.

The communication component 516 is configured for the convenience of wired communication or wired communication between the device 500 and other equipment. The device 500 is available for access to wireless network based on communication standards, for example, WiFi, 2G or 3G, or combination thereof. In an exemplary embodiment, the communication component 516 receives by means of a broadcast channel the broadcast signal or broadcast-related information from external broadcast management systems. In an exemplary embodiment, the communication component 516 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 500 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the image switching method as shown in above Fig.1 or Fig.2A.

In exemplary embodiments, a non-temporary computer-readable storage medium including instructions is also provided, for example, a memory 504 including instructions, above instructions may be executed by the processors 520 of the device 500 so as to achieve the image switching method as shown in Fig.1 or Fig.2A. For example, the non-temporary computer-readable storage medium may be ROM, random access memory (RAM), CD-ROM, magnetic tape, floppy disk and optical data storage device, etc.

A non-temporary computer-readable storage medium, wherein instructions in the storage medium are executed by processors of the device 500 so as to execute the image switching method as shown in above Fig. 1 or Fig.2A.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings.

## Claims

1. A method for switching or transitioning between displayed images in a high definition format, **characterized in that** the method comprises:
overlapping (102) a first resolution version of an ith image on a second resolution version of the ith image displayed currently, the resolution of the first resolution version being below that of the second resolution version, i≥1; and
replacing (104) the second resolution version of the ith image with the second resolution version of an (i+1)th image;
hiding (106) the first resolution version of the ith image according to predetermined animation effects and displaying the second resolution version of the (i+1)th image.

2. The method of claim 1, wherein said overlapping (102) the first resolution version of the ith image on the second resolution version of the ith image displayed currently, comprising:
overlapping the first resolution version of the ith image with a transparency of 0 onto the second resolution version of the ith image displayed currently; and
gradually adjusting the transparency of the first resolution version of the ith image from 0 to 1.

3. The method of claim 2, wherein said hiding (106) the first resolution version of the ith image according to predetermined animation effects and displaying the second resolution version of the (i+1)th image, comprising:
gradually adjusting the transparency of the first resolution version of the ith image from 1 to 0; and
displaying the second resolution version of the (i+1)th image.

4. The method of any of claims 1-3, wherein the method further comprises:
displaying (201) a background image with a transparency of 1, the background image being overlapped on the second resolution version of the first image, and the background image being the image of the first resolution version;
gradually adjusting (202) the transparency of the background image from 1 to 0; and
displaying (203) the second resolution version of the first image.

5. The method of any of claims 1-3, wherein the method further comprising:
overlapping (207) the first resolution version of the (i+1)th image with a transparency of 0 on the second resolution version of the (i+1)th image displayed currently when the (i+1)th image is the last one; and
gradually adjusting (208) the transparency of the first resolution version of the (i+1)th image from 0 to 1.

6. A device for switching or transitioning between displayed images in a high definition format, **characterized in that** the device comprises:
an image overlapping module (310), configured to overlap a first resolution version of an ith image on a second resolution version of the ith image displayed currently, the resolution of the first resolution version being below that of the second resolution version, i≥1;
an image replacement module (320), configured to replace the second resolution version of the ith image with a second resolution version of an (i+1)th image; and
an image display module (330), configured to hide the first resolution version of the ith image according to predetermined animation effects and to display the second resolution version of the (i+1)th image.

7. The device of claim 6, wherein the image overlapping module (310) comprises an image overlapping module and a first adjustment module;
the image overlapping module is configured to overlap the first resolution version of the ith image with a transparency of 0 on the second resolution version of the ith image displayed currently; and
the first adjustment module is configured to gradually adjust the transparency of the first resolution version of the ith image from 0 to 1.

8. The device of claim 7, wherein the image display module (330) comprises a second adjustment module and an image display module;
the second adjustment module is configured to gradually adjust the transparency of the first resolution version of the ith image from 1 to 0; and
the image display module is configured to display the second resolution version of the (i+1)th image.

9. The device of any of claims 6-8, wherein the device further comprises:
a background display module(301), configured to display a background image with a transparency of 1, the background image being overlapped on the second resolution version of the first image, and the background image being the image of the first resolution version;
a first adjustment module (302), configured to gradually adjust the transparency of the background image from 1 to 0; and
a first display module (303), configured to display the second resolution version of the first image.

10. The device of any of claims 6-8, wherein the device further comprises:
a version overlapping module (331), configured to overlap the first resolution version of the (i+1)th image with a transparency of 0 on the second resolution version of the (i+1)th image displayed currently when the (i+1)th image is the last image; and
a second adjustment module (332), configured to gradually adjust the transparency of the first resolution version of the (i+1)th image from 0 to 1.

11. An image switching device, **characterized in** the device comprises:
a processor (520);
a memory (504) configured to store instructions executable by the processor;
wherein, the processor is configured to perform:
overlapping (102) a first resolution version of an ith image on a second resolution version of the ith image displayed currently, the resolution of the first resolution version being below that of the second resolution version, i≥1;
replacing (103) the second resolution version of the ith image with the second resolution version of the (i+1)th image; and
hiding (106) the first resolution version of the ith image and display the second resolution version of the (i+1)th image.

12. A computer program which when executing on a processor, performs the method according to any one of claims 1 to 5.

13. A computer program product stored on a computer usable medium, comprising computer-readable program means for causing a mobile phone to implement the method according to any one of claims 1 to 5.

## Amended claims

### Amended claims in accordance with Rule 137(2) EPC.

**1.** A method for switching or transitioning between displayed images in a high definition format, **characterized in that** the method comprises:
overlaying (102) a first resolution version of an ith image with a transparency of 0 onto a second resolution version of the ith image displayed currently, the resolution of the first resolution version being below that of the second resolution version, i≥1;
gradually adjusting the transparency of the first resolution version of the ith image from 0 to 1, so as to fade in the first resolution version of the ith image;
replacing (104) the second resolution version of the ith image with the second resolution version of an (i+1)th image;
gradually adjusting the transparency of the first resolution version of the ith image from 1 to 0, so as to fade out the first resolution version of the ith image; and
displaying the second resolution version of the (i+1)th image.

**2.** The method of claim 1, wherein the first resolution version of the ith image fades out in a fade-out animation effect.

**3.** The method of claim 1, wherein the method further comprises:
displaying (201) a background image with a transparency of 1, the background image being overlain on the second resolution version of the first image, and the background image being the image of the first resolution version;
gradually adjusting (202) the transparency of the background image from 1 to 0;
and
displaying (203) the second resolution version of the first image.

**4.** The method of claim 1, wherein the method further comprises:
overlaying (207) the first resolution version of the (i+1)th image with a transparency of 0 on the second resolution version of the (i+1)th image displayed currently when the (i+1)th image is the last one; and
gradually adjusting (208) the transparency of the first resolution version of the (i+1)th image from 0 to 1.

**5.** A device for switching or transitioning between displayed images in a high definition format, **characterized in that** the device comprises:
an image overlaying module (310), configured to overlay a first resolution version of an ith image with a transparency of 0 onto a second resolution version of the ith image displayed currently, the resolution of the first resolution version being below that of the second resolution version, i≥1;
a first adjustment module, configured to gradually adjust the transparency of the first resolution version of the ith image from 0 to 1, so as to fade in the first resolution version of the ith image;
an image replacement module (320), configured to replace the second resolution version of the ith image with a second resolution version of an (i+1)th image; and
a second adjustment module, configured to gradually adjust the transparency of the first resolution version of the ith image from 1 to 0, so as to fade out the first resolution version of the ith image; and
an image display module (330), configured to display the second resolution version of the (i+1)th image.

**6.** The device of claim 5, wherein the image display module (330) is adapted to display the first resolution version of the ith image fades out in a fade-out animation effect.

**7.** The device of claim 5, wherein the device further comprises:
a background display module (301), configured to display a background image with a transparency of 1, the background image being overlain on the second resolution version of the first image, and the background image being the image of the first resolution version;
a first adjustment module (302), configured to gradually adjust the transparency of the background image from 1 to 0; and
a first display module (303), configured to display the second resolution version of the first image.

**8.** The device of claim 5, wherein the device further comprises:
a version overlaying module (331), configured to overlay the first resolution version of the (i+1)th image with a transparency of 0 on the second resolution version of the (i+1)th image displayed currently when the (i+1)th image is the last image; and
a second adjustment module (332), configured to gradually adjust the transparency of the first resolution version of the (i+1)th image from 0 to 1.

**9.** A computer program which when executing on a processor, performs the method according to any one of claims 1 to 4.

**12.** A computer program product stored on a computer usable medium, comprising computer-readable program means for causing a mobile phone to implement the method according to any one of claims 1 to 4.
